# EUROPEAN PATENT APPLICATION

(11) **EP 4 440 150 A2**
(43) Date of publication of application: **02.10.2024**
(21) Application number: 24163547.3
(22) Date of filing: 14.03.2024
(51) Int. Cl.: H04R 3/12, H04R 27/00

(54) **SPATIAL INTERACTION FOR VIRTUAL IN-CAR MEETINGS**

(30) Priority: 30.03.2023 US 202363455597 P
(71) Applicant: Cerence Operating Company, Burlington, MA 01803 (US)
(72) Inventor: HAAS, Gabriel, Burlington, MA, 01803 (US); EVANGELISTA, Cristina, Burlington, MA, 01803 (US); FUNK, Markus, Burlington, MA, 01803 (US)
(74) Representative: Taruttis, Tilman

(57) **Abstract**

A method for providing communication between an intravehicular conferee who is in a vehicle and first and second extravehicular conferees who are outside the vehicle includes causing speech by the first extravehicular conferee to originate from a first zone in the vehicle and causing speech by the second extravehicular conferee to originate from a second zone in the vehicle. The first and second zones are volumes of space in a cabin of the vehicle.

## Description

### Background

Many modern vehicles include a speaker phone interface that permits a conference call to take place. In a speaker phone, the voices of the people who are on the other ends of their respective lines emanate from the same location. The overall effect is that they are all in the same place. This can make it difficult to distinguish who is speaking.

In a video-conference system, it is a simple matter to see who is speaking. Each person is displayed in a frame on the screen. In some cases, a video-conference system even highlights a frame to show who is speaking.

In principle, nothing prevents the use of a video-conferencing system in a vehicle. However, as a practical matter, the vehicle's driver is expected to be looking at the road, particularly while the vehicle is moving. This makes it difficult to benefit from this feature of a video-conference system.

### Summary

In one aspect, the invention features a method that comprises providing communication between an intravehicular conferee who is in a vehicle and first and second extravehicular conferees who are outside the vehicle. Providing such communication includes causing speech by the first extravehicular conferee to originate from a first zone in the vehicle and causing speech by the second extravehicular conferee to originate from a second zone in the vehicle. The first and second zones are volumes of space in a cabin of the vehicle.

In some practices, causing speech by the first extravehicular conferee to originate at the first zone comprises assigning a first set of loudspeaker weights to the first extravehicular conferee and applying the weights to loudspeakers in the vehicle while the first extravehicular conferee is speaking and wherein causing speech by the second extra-vehicular conferee to originate from the second zone comprises assigning a second set of loudspeaker weights to the second extra-vehicular conferee and applying the weights to the loudspeakers while the second extra-vehicular conferee is speaking.

Other practices are those in which causing speech by the first extravehicular conferee to originate at the first zone and causing speech by the second extra-vehicular conferee to originate at the second zone comprises assigning a first set of loudspeaker weights to the first extravehicular conferee and a second set of loudspeaker weights to the second extra-vehicular conferee and applying a superposition of the first and second sets of loudspeaker weights to the speakers while the first and second extra-vehicular conferee are speaking simultaneously.

A number of practices incorporate an automotive assistant. This is a digital assistant that has a speech interface. Among such practices are those that include causing speech by an automotive assistant to originate within a third zone in the vehicle, wherein the third zone is a volume in the cabin, those that include providing the extravehicular conferees with access to an automotive assistant within the vehicle, and those in which one of the extra-vehicular conferees is an automotive assistant.

Practices of the invention include an optional feature of enabling side conversations or sidebar conversations in which the intravehicular conferee communicates with some but not all of the extravehicular conferees. This results in a private conference similar to placing a caller on hold.

Among these practices are those that include causing speech by the intravehicular conferee to be audible to the first extravehicular conferee and causing the speech to be inaudible to all other extravehicular conferees.

It is often useful to provide a way to expressly signal a desire to start a private conference. As a result, certain practices include receiving an audible signal by the intravehicular conferee, based on the audible signal, identifying a zone, causing speech by the intravehicular conferee to be audible to an extravehicular conferee assigned to the zone, and causing speech by the intravehicular conferee to be inaudible to all other extravehicular conferees. In this practice, the private conversation that results continues until the intravehicular conferee signals that it is to come to an end.

The act of starting or ending a private conversation is thus a two-part process: designating a zone and indicating a desire to start a private conversation. A variety of options are available for the act of designating a zone. Among these are the act of looking towards the zone in question. In vehicles that have a gaze detector, an intravehicular conferee's gaze towards a zone is readily detectable.

A variety of trigger signals are contemplated for starting and ending a private conversation. These include audio signals, such as a predetermined command or another audible signal, such as a click consonant. Also contemplated are haptic signals such as pressing a button or actuating a lever.

Transition into and out of a "private conversation" requires a state change by the communication system between a first state and a second state. In the first state, the communication system is in a state in which communication between all conferees proceeds on an equal footing. In the second state, the communication system defines first and second sets of extravehicular conferees, with each of the sets having one or more extravehicular conferees, and causes communication between the intravehicular conferee and the one or more extravehicular conferees in the first set to differ from communication between the intravehicular conferee and the one or more extravehicular conferees in the second set. The nature of the difference includes an impediment to communication between the intravehicular conferee and the one or more extravehicular conferees in the second set. Examples of such impediments include disabling all communication with the second set and reducing the volumes of speech by the one or more extravehicular conferees in the second set.

Practices thus also include determining that the intravehicular conferee is directing speech towards a particular zone, receiving a trigger signal, and, in response to the trigger signal, causing speech by the intravehicular conferee to be audible only to an extravehicular conferee assigned to the zone. Still other practices include, in response to receiving a haptic input while the intravehicular conferee is directing speech towards a particular zone, causing speech by the intravehicular conferee to be audible to an extravehicular conferee assigned to the zone and to be inaudible to all other extravehicular conferees.

Following the start of a private conversation, it is useful to be able to end it and allow others to rejoin the conference. As a result, certain practices further include restoring communication with the second extravehicular conferee after having disabled communication with the second extravehicular conferee.

Other practices include different methods for ending a private conversation and restoring communication. These include determining that the intravehicular conferee's has shifted towards a public zone and restoring communication with all extravehicular conferees who are not in communication with the intravehicular conferee.

Among the practices are those that include providing communication between the first and second extravehicular conferees. This is similar to what in telephone is referred to as a "conference call."

Also among the practices are those that include providing communication between an intravehicular conferee who is in a vehicle and first and second extravehicular conferees who are outside the vehicle comprises causing placing the second extravehicular conferee in a communication state that differs from that of the first extravehicular conferee. Examples include placing the second extravehicular conferee on hold while the intravehicular conferee is speaking with the first extravehicular conferee.

In still other practices, in which intravehicular conferee is one of a plurality of intravehicular conferees in the vehicle, the method further comprises providing, to the extravehicular conferees, information for enabling each of the extravehicular conferees to determine which of the intravehicular conferees is speaking, the information having been derived from directions-of-arrival of sound waves launched by the intravehicular conferees.

In another aspect, the invention features an apparatus for providing communication between an intravehicular conferee in a cabin of a vehicle and plural extravehicular conferees. Such an apparatus includes an on-board component that comprises an audio-zone synthesizer that assigns audio zones within the cabin to corresponding ones of the extravehicular conferees, an acoustic goniometer that determines a zone towards which an intravehicular conferee is speaking, and a balancing circuit that controls loudspeakers in the vehicle to cause speech by each of the extravehicular conferees to originate from an audio zone that has been assigned to the extravehicular conferee.

Further embodiments include an automotive assistant that is configured to participate in the communication, wherein the automotive assistant is assigned an acoustic zone.

Also among the embodiments are those that include a selective-muting circuit that temporarily excludes one or more extravehicular conferees from communicating with the intravehicular conferee.

Still other embodiments include a cloud-based component that hosts a conference between the extravehicular conferees and the intravehicular conferee, the cloud-based component being configured to provide the on-board component with signals from each of the extravehicular conferees to enable the on-board component to distinguish the signals for assigning the audio zones to the corresponding ones of the extravehicular conferees.

All methods described and claimed herein are carried out in a non-abstract manner. All systems described herein are non-abstract systems that are made of matter and consume energy during operation thereof. Any abstract implementations have been specifically omitted. Accordingly, any person who construes the claims as covering any abstract subject matter will simply have demonstrated the possibility of construing claims in a manner that is inconsistent with the specification. As used herein, "non-abstract" shall be construed as the converse of "abstract" and "abstract" shall be construed in the manner in which it has been defined by the United States Supreme Court and by the Federal Circuit Court of Appeals as of the time of filing this application.

These and other features of the invention will be apparent from the following detailed description and the accompanying figures, in which:

### Description of Drawings

FIG. 1 shows an intravehicular conferee engaged in a conference with two extravehicular conferees,
FIG. 2 shows an exemplary architecture for a communication system that enables the conference shown in FIG. 1,
FIG. 3 shows acoustic zones assigned to the extravehicular conferees of FIG. 1,
FIG. 4 shows the embodiment of FIG. 2 with an additional acoustic zone having been assigned to an automotive assistant,
FIG. 5 shows an embodiment similar to that in FIG. 3 but with the automotive assistant having been assigned to the public zone,
FIG. 6 shows an embodiment in which the extravehicular conferees are not in communication with each other, and

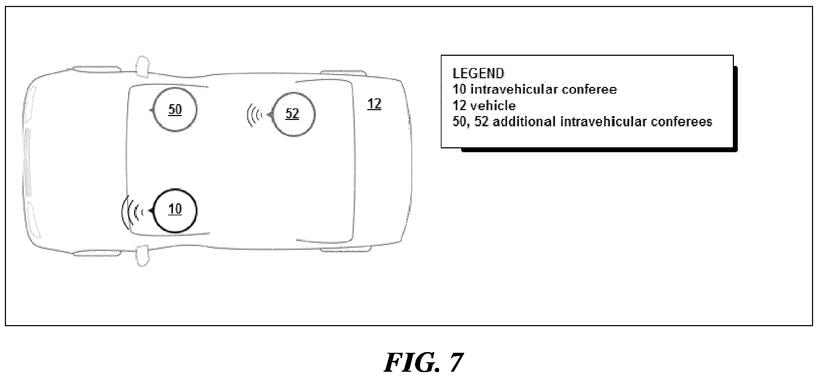

FIG. 7 shows plural intravehicular conferees in the vehicle of FIG. 1.

### Detailed Description

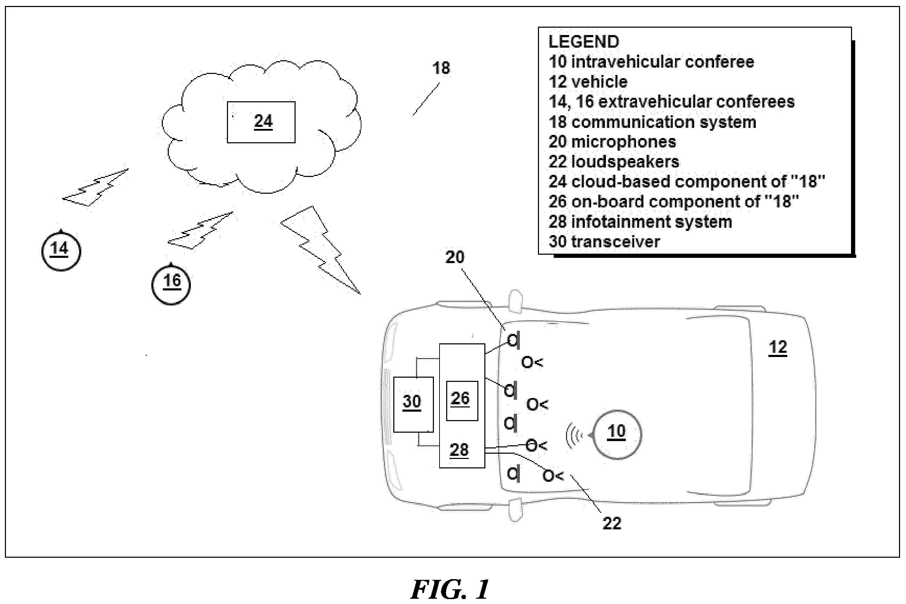

FIG. 1 shows an intravehicular conferee 10 in a vehicle 12. The intravehicular conferee 10 is participating in a conference call with plural extra-vehicular conferees 14, 16 through the mediation of a communication system 18. An array of microphones 20 and an array of loudspeakers 22 disposed throughout the vehicle 12 provide audio communication between the intravehicular conferee 10 and the extravehicular conferees 14, 16.

It should be noted that the term an "extravehicular conferee" is simply outside the vehicle 12 of the intravehicular conferee 10. It is quite possible that an extravehicular conferee 14 is within another vehicle.

The communication system 18 features a cloud-based component 24 and an on-board component 26.

The on-board component 26 executes on an infotainment system 28 within the vehicle 12. The infotainment system 28 is in communication with the microphones 20, the loudspeakers 22, and a transceiver 30 in the vehicle 12. The transceiver 30 provides communication between the on-board component 26 and the cloud-based component 24.

The cloud-based component 24 connects the various conferees 10, 14, 16 and hosts the conference. The cloud-based component 24 also maintains information identifying which signal corresponds to which conferee and makes this available to the on-board component 26.

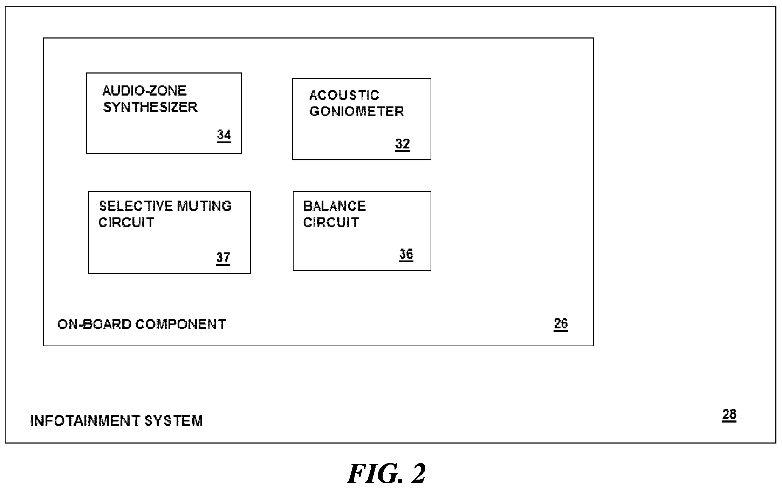

Referring now to FIG. 2, the on-board component 26 includes an acoustic goniometer 32, an audio-zone synthesizer 34, a multi-dimensional balancing circuit 36, and a selective-muting circuit 37.

The acoustic goniometer 32 determines an angle indicative of a direction of arrival of sound wave emanating from the intravehicular conferee 12. In a preferred embodiment, the angle is a solid angle that carries information concerning an azimuth and elevation relative to the intravehicular conferee 12. In some embodiments, the acoustic goniometer 32 relies on a camera that observes the intravehicular conferee's gaze direction.

Upon speaking, the intravehicular conferee launches a sound wave. As a result, at each point in space, there exists a time-varying scalar quantity indicative of air pressure at that point. This results in a time-varying sound field everywhere in space, including at each microphone 20.

In some embodiments, the acoustic goniometer 32 detects a value of a time-varying sound field at each microphone 20. This results in acquisition of an ensemble of time-varying values, one for each microphone 20. Based on these values and on known positions of each microphone 20, the acoustic goniometer 32 infers the direction-of-arrival thus acquired to infer a direction towards which the intravehicular conferee 10 speaks. For example, upon observing the identical signal at two microphones 20, the acoustic goniometer 32 infers that the direction of arrival must be perpendicular to a line joining those two microphones. Conversely, if a signal at one microphone 20 is a delayed version of an identical signal at another microphone 20, the acoustic goniometer 32 infers a direction-of-arrival based on the extent of the delay. In other embodiments, the acoustic goniometer 32 includes a camera and gaze-detection circuitry that observes the intravehicular conferee's gaze direction. Since the source of sound on a human is attached to the head, orientation of the human's head provides a basis for inferring direction-of-arrival of any sound emanating from that sound source.

The balancing circuit 36 controls weights assigned to each loudspeaker 22, thus controlling an apparent location of sound source.

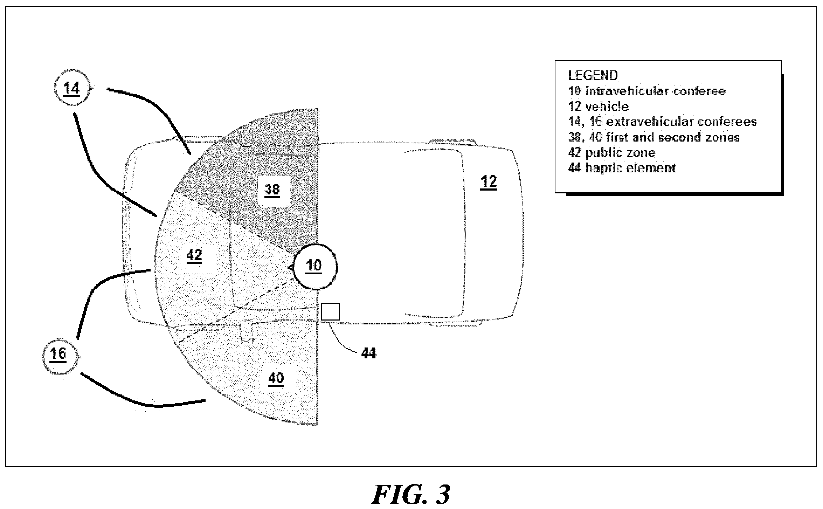

Referring now to FIG. 3, the audio-zone synthesizer 34 receives information concerning the number of external conferees 14, 16 and divides the space in front of the intravehicular conferee 10 into several acoustic zones 38, 40, 42. Each acoustic zone (hereafter referred to simply as a "zone" for brevity) is a volume of the space in front of the intravehicular conferee 10.

These zones will be assigned to extravehicular conferees 14, 16 with which the intravehicular entity 10 may wish to communicate. The zones shown in FIG. 3 consist of a first zone 38, a second zone 40, and a public zone 42. The first zone 38 is assigned to the first extravehicular conferee 14 and the second zone 40 is assigned to the second extravehicular conferee 16. The public zone 42 is assigned to all of the extravehicular conferees 14, 16. The balancing circuit 36 causes speech from an extravehicular conferee 14, 16 to emanate from the zone assigned to that extravehicular conferee 14, 16.

Dividing the space into zones and causing speech from a particular entity to emanate from its assigned zone allows the intravehicular conferee 10 to perceive spatial separation between different extravehicular conferees 14, 16. This duplicates the experience of a conference in which all the conferees 10, 14, 16 are physically present and speaking from different locations.

In some embodiments, the zones 38, 40, 42 will also be used in connection with controlling which of the extravehicular conferees 14, 16 the intravehicular conferee 10 wishes to address and which of the extravehicular conferees 14, 16 the intravehicular conferee 10 wishes to exclude. This will be discussed in connection with a subsequent figure.

The balancing circuit 36 defines a set of loudspeaker weights for each of the extravehicular conferees 14, 16. If the first extravehicular conferee 14 is speaking, the balancing circuit 36 applies a first set of loudspeaker weights. This first set of loudspeaker weights causes the intravehicular conferee 10 to perceive speech originating in the first zone 38. Conversely, if the second extravehicular conferee 16 is speaking, the balancing circuit 36 applies a second set of loudspeaker weights. This second set of loudspeaker weights causes the intravehicular conferee 10 to perceive speech originating in the second zone 40. If both the extravehicular conferees 14, 16 are speaking, the balancing circuit 36 applies a superposition of the first and second weights to the loudspeakers. This causes the intravehicular conferee 10 to perceive sound originating from both the first and second zones 30, 32 at the same time. As a result, the intravehicular conferee 10 experiences a conference call in much the same way as an actual conference would be experienced, namely with spatial cues indicating directions to different conferees.

In one implementation, the balancing circuit 36 assigns, to each zone 38, 40, a a set of weights. In some embodiments, the weights are scalar. In other embodiments, the weights are pairs of scalars from which the balancing circuit 36 is able to determine a magnitude and phase, the former by summing squares of the two scalars and the latter by relying on a ratio between the two scalars. Upon receiving information that an extravehicular conferee 14, 16 is speaking, the balancing circuit 36 retrieves the weights corresponding to that conferee's assigned zone and uses them to weight the outputs of the loudspeakers 22. This creates the illusion of the conferee's voice emanating from that conferee's assigned zone.

The public zone 42 is assigned to all extravehicular conferees 14, 16. Its use arises as a result of the acoustic goniometer's ability to implement a side conversation.

To initiate a side conversation with a particular zone, e.g., the first zone 38, the intravehicular conferee 10 triggers a control while looking in the direction of the first zone 38. The selective-muting circuit 37 receives this control and, in response, changes which of the extravehicular conferees 14, 16 will be able to communicate with the intravehicular conferee 10. This includes temporarily excluding one or more extravehicular conferees from the conference, a process analogous to placing a caller on "hold," and re-including the excluded extravehicular conferees.

In some embodiments, triggering the control comprises uttering a control word, such as "activate zone." In other embodiments, triggering the control comprises making a less obtrusive acoustic signal, such as a designated click consonant. In still other embodiments, triggering the control comprises actuating a haptic element 44, such as pressing a button or pushing a lever.

Upon detecting the triggering of control, the microphone controller changes the communication state of all other zones, which in this cases means changing the communication states of the second and third zones. In some embodiments, this includes muting the second and third zones. In others, this includes changing the volumes of sound emanating from those zones and/or changing the extent to which those zones are permitted to receive audio signals that exist within the vehicle 12.

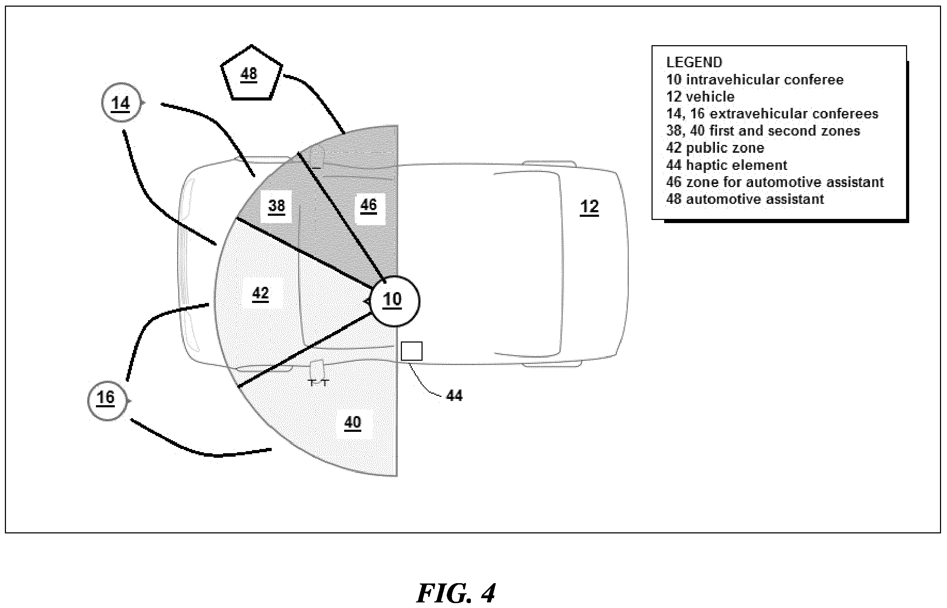

An extra-vehicular conferee 16, 14 need not be a human being. As shown in FIG. 4, a fourth zone 46 has been carved out and assigned to an automotive assistant 48. In this case, it is possible to have a side conference with the automotive assistant 48 to the exclusion of the human extravehicular conferees 14, 16.

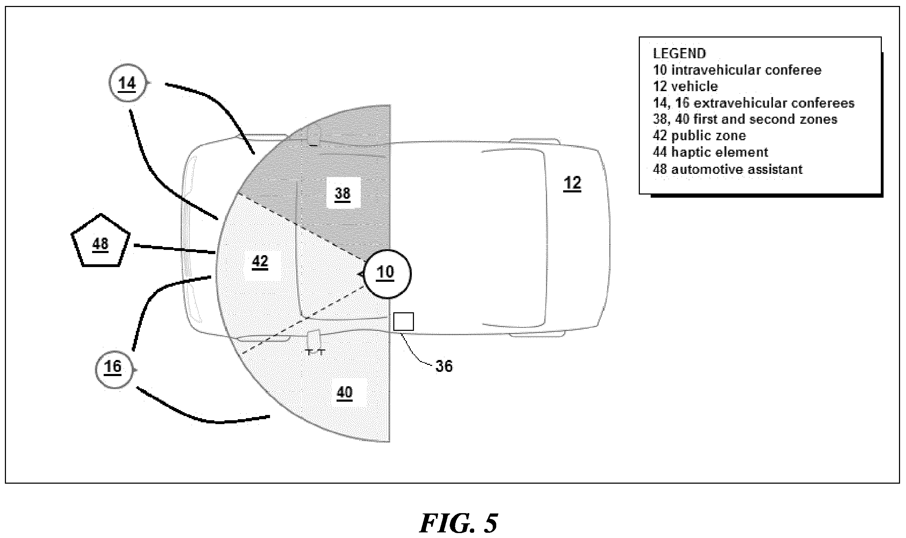

In a variant of the foregoing embodiment, no additional zone 46 is carved out for the automotive assistant 48. Instead, the automotive assistant is assigned to the public zone 42, as shown in FIG. 5. In this configuration, both the intravehicular conferee 10 and the extravehicular conferees 14, 16 are able to communicate with the automotive assistant 48.

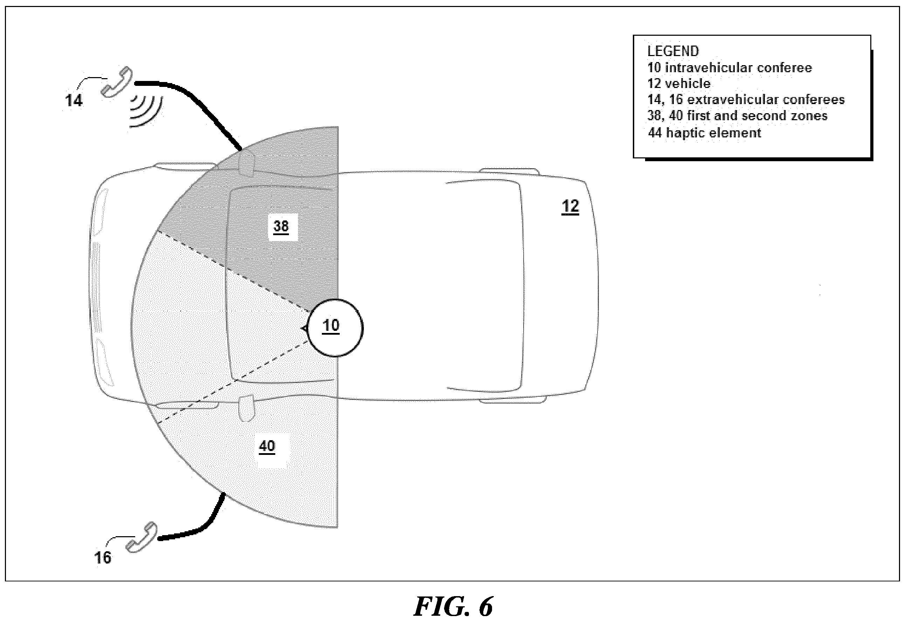

In some cases, the extravehicular conferees 14, 16 are not actually in communication with each other. In such a case, no public zone 42 is needed. This situation arises when the intravehicular conferee 10 engages in two simultaneous telephone calls, as shown in FIG. 6. In this case, the foregoing process for engaging in a side conference with the first extravehicular conferee 14 is equivalent to placing the second extravehicular conferee 16 on hold.

In the embodiments described thus far, there has been only one intravehicular conferee 10. However, in some cases, more than one person is within the vehicle 12, some of whom may wish to participate in the conference.

FIG. 6 shows a case in which there exist additional intravehicular conferees 50, 52 in the vehicle 12.

As noted above, the acoustic goniometer 32 determines the direction-of-arrival or expected direction-of-arrival, in the case of gaze detection, of a sound wave from the intravehicular conferee 10. This provides a basis for inferring the location of the intravehicular conferee 10.

Since the acoustic goniometer 32 can carry this out for one intravehicular conferee 10, there is no plausible reason for why it cannot carry out the same procedure for any one of the additional intravehicular conferees 50, 52. These different directions-of-arrival provide a basis for tagging speech by different intravehicular conferees 10, 50, 52.

These tags are then provided to the cloud-based component 24, which uses them to enable the extravehicular conferees 14, 16 to identify which of the various intravehicular conferees 10, 50, 52 is speaking at any given time. This can be carried out by an extravehicular conferee 14, 16 in much the same way that has been described above.

As a result, the communication system 18 provides bilateral spatial intelligence concerning locations of speakers in a conference.

In the inbound direction, as seen from the vehicle 12, the on-board component 26 receives speech that has been tagged by the cloud-based component 24 on a conferee-by-conferee basis. As a result, it was possible to assign each extravehicular conferee 14, 16 to a particular zone 38, 40.

In the outbound direction, the on-board component likewise receives speech that has been tagged by the acoustic goniometer 32 on a conferee-by-conferee basis. This information is made available to each of the extravehicular conferees 14, 16 to use as desired.

Having described the invention and a preferred embodiment thereof, what is claimed as new and secured by letters patent is:

## Claims

1. A method comprising providing communication between an intravehicular conferee who is in a vehicle and first and second extravehicular conferees who are outside said vehicle, wherein providing said communication comprises causing speech by said first extravehicular conferee to originate from a first zone in said vehicle and causing speech by said second extravehicular conferee to originate from a second zone in said vehicle, wherein said first and second zones are volumes of space in a cabin of said vehicle.

2. The method of claim 1, wherein causing speech by said first extravehicular conferee to originate at said first zone comprises assigning a first set of loudspeaker weights to said first extravehicular conferee and applying said weights to loudspeakers in said vehicle while said first extravehicular conferee is speaking and wherein causing speech by said second extra-vehicular conferee to originate from said second zone comprises assigning a second set of loudspeaker weights to said second extra-vehicular conferee and applying said weights to said loudspeakers while said second extra-vehicular conferee is speaking.

3. The method of claim 1, wherein causing speech by said first extravehicular conferee to originate at said first zone and causing speech by said second extra-vehicular conferee to originate at said second zone comprises assigning a first set of loudspeaker weights to said first extravehicular conferee and a second set of loudspeaker weights to said second extra-vehicular conferee and applying a superposition of said first and second sets of loudspeaker weights to said speakers while said first and second extra-vehicular conferee are speaking simultaneously.

4. The method of claim 1, further comprising causing speech by an automotive assistant to originate within a third zone in said vehicle, wherein said third zone is a volume in said cabin.

5. The method of claim 1, further comprising providing said extravehicular conferees with access to an automotive assistant within said vehicle.

6. The method of claim 1, further comprising selecting said first extra-vehicular conferee to be an automotive assistant.

7. The method of claim 1, further comprising causing speech by said intravehicular conferee to be audible to said first extravehicular conferee and causing said speech to be inaudible to all other extravehicular conferees.

8. The method of claim 1, further comprising receiving an audible signal by said intravehicular conferee, based on said audible signal, identifying a zone, causing speech by said intravehicular conferee to be audible to an extravehicular conferee assigned to said zone, and causing speech by said intravehicular conferee to be inaudible to all other extravehicular conferees.

9. The method of claim 1, further comprising determining that said intravehicular conferee is directing speech towards a particular zone, receiving a trigger signal, and, in response to said trigger signal, causing speech by said intravehicular conferee to be audible only to an extravehicular conferee assigned to said zone.

10. The method of claim 1, further comprising determining that said intravehicular conferee is oriented to direct speech towards a particular zone, receiving a trigger signal, and, in response to said trigger signal, causing a change in an extent of communication between said intravehicular conferee extravehicular conferees that have been assigned to zones other than said particular zone.

11. The method of claim 1, further comprising, in response to receiving a haptic input while said intravehicular conferee is directing speech towards a particular zone or oriented to direct speech towards said particular zone, causing speech by said intravehicular conferee to be audible to an extravehicular conferee assigned to said zone and to be inaudible to all other extravehicular conferees.

12. The method of claim 1, further comprising restoring communication with said second extravehicular conferee after having disabled communication with said second extravehicular conferee.

13. The method of claim 1, further comprising determining that said intravehicular conferee is directing speech towards a public zone and restoring communication with all extravehicular conferees who are not in communication with said intravehicular conferee.

14. The method of claim 1, further comprising providing communication between said first and second extravehicular conferees.

15. The method of claim 1, wherein said intravehicular conferee is one of a plurality of intravehicular conferees in said vehicle and wherein said method further comprises providing, to said extravehicular conferees, information for enabling each of said extravehicular conferees to determine which of said intravehicular conferees is speaking, said information having been derived from directions-of-arrival of sound waves launched by said intravehicular conferees.

16. The method of claim 1, wherein providing communication between an intravehicular conferee who is in a vehicle and first and second extravehicular conferees who are outside said vehicle comprises causing placing said second extravehicular conferee to be placed on hold while said intravehicular conferee is speaking with said first extravehicular conferee.

17. The method of claim 1, wherein providing communication between an intravehicular conferee who is in a vehicle and first and second extravehicular conferees who are outside said vehicle comprises causing a reduction in an extent to which said second extravehicular conferee is able to communicate with said intravehicular conferee while said intravehicular conferee is speaking with said first extravehicular conferee.

18. An apparatus for providing communication between an intravehicular conferee in a cabin of a vehicle and plural extravehicular conferees, said apparatus comprising an on-board component that comprises an audio-zone synthesizer that assigns audio zones within said cabin to corresponding ones of said extravehicular conferees, an acoustic goniometer that determines a zone towards which an intravehicular conferee is speaking, and a balancing circuit that controls loudspeakers in said vehicle to cause speech by each of said extravehicular conferees to originate from an audio zone that has been assigned to said extravehicular conferee.

19. The apparatus of claim 18, further comprising an automotive assistant that is configured to participate in said communication, wherein said automotive assistant is assigned an acoustic zone.

20. The apparatus of claim 18, further comprising a selective-muting circuit that temporarily excludes one or more extravehicular conferees from communicating with said intravehicular conferee.

21. The apparatus of claim 18, further comprising a cloud-based component that hosts a conference between said extravehicular conferees and said intravehicular conferee, said cloud-based component being configured to provide said on-board component with signals from each of said extravehicular conferees to enable said on-board component to distinguish said signals for assigning said audio zones to said corresponding ones of said extravehicular conferees.

22. The apparatus of claim 18, further comprising an automotive assistant, a selective-muting circuit, and a cloud-based component, wherein said automotive assistant, which is assigned to acoustic zone, is configured for participation in said communication, wherein said selective-muting circuit temporarily excludes one or more extravehicular conferees from communicating with said intravehicular conferee in response to an instruction from said intravehicular conferee and restores communication with said one or more extravehicular conferees in response to another instruction from said intravehicular conferee, and wherein said cloud-based component hosts a conference between said extravehicular conferees and said intravehicular conferee, said cloud-based component being configured to provide said on-board component with signals from each of said extravehicular conferees to enable said on-board component to distinguish said signals for assigning said audio zones to said corresponding ones of said extravehicular conferees.
